# EUROPEAN PATENT SPECIFICATION

(11) **EP 3 133 689 B1**
(45) Date of publication and mention of the grant of the patent: **02.01.2019**
(21) Application number: 16183477.5
(22) Date of filing: 10.08.2016
(51) Int. Cl.: H01M 8/0662, B01D 53/32, C01B 3/50

(54) **HYDROGEN PURIFIERS AND HYDROGEN PURIFICATION SYSTEMS**
WASSERSTOFFREINIGER UND WASSERSTOFFREINIGUNGSSYSTEME
PURIFICATEURS D'HYDROGÈNE ET SYSTÈMES DE PURIFICATION D'HYDROGÈNE

(30) Priority: 19.08.2015 JP 2015162167
(43) Date of publication of application: 22.02.2017
(73) Proprietor: Panasonic Intellectual Property Management Co., Ltd., Osaka-shi, Osaka 540-6207 (JP)
(72) Inventor: WAKITA, Hidenobu, Osaka-shi, Osaka 540-6207 (JP); ITOH, Yasuhiko, Osaka-shi, Osaka 540-6207 (JP); OKAICHI, Atsuo, Osaka-shi, Osaka 540-6207 (JP); SAKAI, Osamu, Osaka-shi, Osaka 540-6207 (JP)
(74) Representative: Grünecker Patent- und Rechtsanwälte PartG mbB

(56) References cited:
- WO-A1-2015/020065
- JP-A- 2015 117 139
- JP-B2- 3 605 211
- US-A1- 2003 010 629
- US-B1- 6 361 896
- GARDNER ET AL: "Electrochemical separation of hydrogen from reformate using PEM fuel cell technology", JOURNAL OF POWER SOURCES, ELSEVIER SA, CH, vol. 171, no. 2, 8 September 2007 (2007-09-08), pages 835-841, XP022238093, ISSN: 0378-7753, DOI: 10.1016/J.JPOWSOUR.2007.06.020

## Description

### BACKGROUND

### 1. Technical Field

The present disclosure relates to hydrogen purifiers and hydrogen purification systems.

### 2. Description of the Related Art

A fuel cell vehicle uses a fuel cell to generate electricity, which powers a motor that drives the fuel cell vehicle. In recent years, fuel cell vehicles attract attention from the points of view of the enhancement in fuel efficiency and the promotion of the use of carbon-free fuels. With the sales of fuel cell vehicles having started, the proliferation of fuel cell vehicles has encountered challenges in improving infrastructures for supplying hydrogen gas as a fuel and in building a large number of hydrogen stations in widespread areas. Pressure swing adsorption (PSA) is a technique that is used so far in hydrogen stations to purify and compress hydrogen. However, drawbacks such as large size of apparatus and significant setup cost have been obstacles to the widespread adoption of hydrogen stations.

On the other hand, fuel cell cogeneration systems achieve high power generation efficiency and high total efficiency and are known as distributed energy-efficient power sources. Many types of fuel cells, for example, polymer electrolyte membrane (PEM) fuel cells, use hydrogen as a fuel for power generation. While such fuel cells require hydrogen to generate electricity, the infrastructures are not usually equipped with hydrogen supply units and therefore hydrogen needs to be produced at the location of the fuel cell cogeneration system. Due to this fact, the conventional fuel cell cogeneration systems frequently have a hydrogen generator in addition to a fuel cell. In the hydrogen generator, for example, hydrogen is generated from a hydrocarbon raw material such as natural gas or LPG by a steam reforming method.

In light of the circumstances described above, a hydrogen supply unit has been proposed which generates a hydrogen-containing gas (a reformer gas) in a small-sized hydrogen generator used in such a system as a household fuel cell cogeneration system, and separates the hydrogen-containing gas to purify and compress hydrogen with use of a membrane-electrode assembly (hereinafter, sometimes written as MEA) that includes a proton conductive polymer electrolyte membrane and electrodes on both sides of the membrane, hydrogen ions being passed through the membrane upon the application of electric current (see, for example, Japanese Unexamined Patent Application Publication No. 2004-247290 (hereinafter, Patent Literature 1)).

In association with the above technique, a method has been proposed in which a reformer gas is supplied to an anode electrode in such a manner that a carbon monoxide selective oxidation catalyst layer is disposed adjacent to the anode electrode so that carbon monoxide present in the reformer gas is oxidatively removed before the reformer gas reaches the anode electrode (see, for example, Japanese Patent No. 3910642 (hereinafter, Patent Literature 2)).

Further, a method has been proposed in which pulses of a high voltage are applied to an electrode poisoned with carbon monoxide so as to oxidatively remove carbon monoxide and the electrode is regenerated each time it is poisoned (see, for example, C. L. Gardner, M, Ternan, Journal of Power Sources 171 (2007) 835 (hereinafter, Non Patent Literature 1)).

In addition, an electrochemical hydrogen purifier receiving a mixture of hydrogen, oxygen and carbon monoxide at the anode is disclosed in document JP2015-117139.

### SUMMARY

One non-limiting and exemplary embodiment provides a hydrogen purifier which can purify hydrogen from a hydrogen-containing gas in a highly efficient manner with a simpler configuration than the conventional purifiers. The subject-matter of the present invention is defined in the appended claims.

In one general aspect, the techniques disclosed here feature a hydrogen purifier including an electrolyte membrane including a proton conductive polymer, an anode including an anode catalyst layer disposed on one side of the electrolyte membrane, a cathode including a cathode catalyst layer disposed on the other side of the electrolyte membrane, a separator which has a fluid channel and through which carbon monoxide, hydrogen and oxygen are supplied to the anode, and a power supply that energizes the anode and the cathode, the anode catalyst layer including Pt, the cathode catalyst layer including Pt and Ru.

The hydrogen purifier according to one general aspect of the present disclosure can purify hydrogen from carbon monoxide-hydrogen mixed gas in a highly efficient manner with a simpler configuration than the conventional purifiers.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram illustrating an example of the performance of membrane-electrode assemblies in the purification of hydrogen;
   Fig. 2 is a diagram illustrating another example of the performance of membrane-electrode assemblies in the purification of hydrogen;
   Fig. 3 is a view illustrating an example of hydrogen purifiers according to Embodiment 1; and
   Fig. 4 is a view illustrating an example of hydrogen purification systems according to Embodiment 2.

### DETAILED DESCRIPTION

The present inventors studied the above-discussed configurations associated with the purification of hydrogen gas containing carbon monoxide (a reformer gas). As a result, the present inventors have obtained the following findings.

The configuration of Patent Literature 1 has a problem in that the voltage in the MEA is increased by carbon monoxide that is present in a slight amount in the reformer gas produced in the hydrogen generator and consequently the efficiency is decreased. In the configuration of Patent Literature 2, the fact that the anode electrode has two layers causes the resistance of the anode electrode to be increased, resulting in a decrease in efficiency. Further, the configuration of Non Patent Literature 1 has a problem in that the regeneration process has to be repeated frequently depending on the carbon monoxide concentration and the operation conditions.

As a result of studies directed to solving these problems, the present inventors have found that the purification of hydrogen from a reformer gas can take place in a highly efficient manner according to a simple configuration in which use is made of a cathode catalyst layer including Pt and Ru and an anode catalyst layer including Pt and Ru, and the anode and the cathode are energized while supplying oxygen together with carbon monoxide and hydrogen to the anode. Based on the finding, the present inventors have completed one aspect of the present disclosure. The knowledge forming the basis of the present disclosure will be described in detail below.

Hydrocarbon raw materials such as city gas and LP gas are steam reformed in a hydrogen generator. In the hydrogen generator, a hydrogen-rich reformer gas discharged to the downstream of a reforming catalyst contains approximately 10 vol% of carbon monoxide on the dry gas basis. In a PEM fuel cell, carbon monoxide causes a decrease in power generation performance. Thus, the carbon monoxide concentration in the reformer gas is reduced to about 0.5 vol% with a shift catalyst and is further reduced to about 20 ppm or less under the catalysis of a carbon monoxide selective oxidation catalyst in the presence of a slight amount of air, the resultant reformer gas being then supplied to the PEM fuel cell.

The present inventors performed a purification of hydrogen with use of a hydrogen purifier which included a proton conductive polymer electrolyte membrane, an anode on one side and a cathode on the other side of the electrolyte membrane, and separators including a fluid channel and disposed on both the cathode and the anode. Specifically, a reformer gas containing about 20 ppm of carbon monoxide was supplied to the anode while energizing the anode and the cathode to study the influence of carbon monoxide.

As a result of the study, the present inventors have found that hydrogen can be purified from the reformer gas with high efficiency when the anodic and cathodic electrodes are each provided with an electrode catalyst layer containing Pt and Ru and are energized while supplying oxygen and the reformer gas to the anode.

In the case of a PEM fuel cell, power can be generated with high efficiency under the catalysis of a Pt-Ru/carbon black (hereinafter, written as CB) catalyst disposed on the anode even without the addition of air when the concentration of carbon monoxide present in the reformer gas is as low as not more than 20 ppm.

However, as will be demonstrated by experiments later, the present inventors have found that hydrogen purification in the presence of 20 ppm carbon monoxide without the addition of air to the anode results in an increase in the voltage of the hydrogen purifier and consequently the efficiency is decreased.

As possible factors responsible for such an increase in voltage, carbon dioxide present in the reformer gas is cross leaked from the anode to the cathode through the electrolyte membrane in the hydrogen purifier and undergoes reverse shift reaction at the cathode to form a slight amount of carbon monoxide. That is, when an MEA is used in power generation, carbon monoxide derived from carbon dioxide that has been cross leaked can be oxidatively removed because air is supplied to the cathode. In contrast, when an MEA is used in the purification of hydrogen, the absence of air (oxygen) at the cathode probably results in the poisoning of the cathode with carbon monoxide.

As will be demonstrated by experiments later, the voltage in an MEA is increased when no air (oxygen) is supplied to the anode in each case of using a Pt/CB catalyst or a Pt-Ru/CB catalyst in the cathode. The increase in voltage is more marked in the case of a Pt-Ru/CB catalyst. In contrast, as will be demonstrated by experiments later, studies have shown that when air (oxygen) is supplied to the anode, the increase in MEA voltage does not occur in each case of the catalysts and hydrogen can be purified stably. Based on the results, it is probable that the supply of air to the anode makes it possible to suppress the reverse shift reaction of carbon dioxide at the cathode. When, in particular, both the anode and the cathode of an MEA have a Pt-Ru/CB catalyst, the supply of air to the anode has been shown to markedly suppress the increase in voltage as compared to when the anode has a Pt-Ru/CB catalyst and the cathode has a Pt/CB catalyst.

When the anode in an MEA has a Pt/CB catalyst and the cathode has a Pt-Ru/CB catalyst, the supply of air (oxygen) to the anode allows for stable purification of hydrogen without an increase in MEA voltage for the same reasons as described above.

In a hydrogen purifier, the efficiency is decreased when air (oxygen) is not supplied to the anode and the cathode catalyst layer has Pt and Ru. This problem caused by such a configuration has not been known in the art. Provided that air (oxygen) is supplied to the anode, the efficiency of a hydrogen purifier is decreased to a greater extent when the cathode catalyst layer includes Pt alone as compared to when the cathode catalyst layer includes both Pt and Ru. This is a novel problem found by the present inventors. Thus, the knowledge described hereinabove is technically significant in identifying that a hydrogen purifier configured so that the cathode catalyst layer includes Pt and Ru and air (oxygen) is supplied to the anode can purify hydrogen with higher efficiency than the conventional hydrogen purifiers.

One aspect of the present disclosure resides in a hydrogen purifier which, in a first embodiment, includes an electrolyte membrane including a proton conductive polymer, an anode including an anode catalyst layer disposed on one side of the electrolyte membrane, a cathode including a cathode catalyst layer disposed on the other side of the electrolyte membrane, a separator which has a fluid channel and through which carbon monoxide, hydrogen and oxygen are supplied to the anode, and a power supply that energizes the anode and the cathode, the anode catalyst layer including Pt, the cathode catalyst layer including Pt and Ru.

The above configuration is simplified compared to the conventional purifiers but still allows for highly efficient purification of hydrogen from carbon monoxide-hydrogen mixed gas.

In a second embodiment of the hydrogen purifier according to the present disclosure, the anode catalyst layer in the hydrogen purifier of the first embodiment may include Pt and Ru.

With the above configuration, the anode is prevented from being poisoned with carbon monoxide and thus the purifier can purify hydrogen more efficiently.

In a third embodiment of the hydrogen purifier according to the present disclosure, the anode catalyst layer in the hydrogen purifier of the first or the second embodiment may be a single electrode catalyst layer.

With the above configuration, as compared to when the anode catalyst layer has a multilayer structure including, for example, a Pt/CB catalyst layer and a Ru/CB catalyst layer, the internal resistance can be decreased and the purifier can purify hydrogen from carbon monoxide-hydrogen mixed gas with high efficiency.

Another aspect of the present disclosure resides in a hydrogen purification system which, in a first embodiment, includes a hydrogen generator and a hydrogen purifier, the hydrogen generator including a reformer that generates a hydrogen-containing gas by reforming reaction of a hydrocarbon raw material, a shifter that reduces the amount of carbon monoxide in the hydrogen-containing gas discharged from the reformer by shift reaction, and a CO remover including at least one of a selective oxidizer that oxidizes carbon monoxide present in the hydrogen-containing gas discharged from the shifter so as to further reduce the amount of carbon monoxide and a methanator that methanates carbon monoxide present in the hydrogen-containing gas discharged from the shifter so as to further reduce the amount of carbon monoxide, the hydrogen purifier including an electrolyte membrane including a proton conductive polymer, an anode having an anode catalyst layer disposed on one side of the electrolyte membrane, a cathode having a cathode catalyst layer disposed on the other side of the electrolyte membrane, a separator which has a fluid channel and through which the hydrogen-containing gas discharged from the CO remover and oxygen are supplied to the anode, and a power supply that energizes the anode and the cathode. The anode catalyst layer may include Pt, and the cathode catalyst layer may include Pt and Ru.

The above configuration is simplified compared to the conventional systems but still allows hydrogen to be purified with high efficiency from hydrogen gas containing carbon monoxide. The concentration of carbon monoxide in the hydrogen-containing gas supplied from the reformer can be reduced, for example, from about 10 vol% to 20 ppm or less. Thus, the amount of air (oxygen) to be supplied to the anode may be set to the minimum required. As a result, problems such as the oxidative degradation of the hydrogen purifier can be prevented.

In a second embodiment of the hydrogen purification system according to the present disclosure, the anode catalyst layer may include Pt and Ru.

With the above configuration, the anode is prevented from being poisoned with carbon monoxide and thus the hydrogen purification system can purify hydrogen more efficiently.

### (Embodiments)

Hereinbelow, embodiments of the present disclosure will be described in detail with reference to the drawings. In the drawings, identical or equivalent components will be indicated with the same reference signs and any duplication of the description of such components will be avoided.

### <<Embodiment 1>>

### [Fabrication of membrane-electrode assembly MEA-A]

First, a 50 wt% Pt/CB catalyst powder was added to a mixed solvent including water and ethanol in a weight ratio of 1:1. A 25.9 wt% PFSA binder solution was added so that the weight ratio of the ionomer to carbon would be 0.8 (ionomer/C = 0.8 (by weight)). In this manner, a dispersion slurry for a cathode catalyst layer was prepared.

Next, the dispersion slurry prepared above was sprayed onto one side (60 × 60 mm square) of a fluoropolymer electrolyte membrane on a hot plate kept at 60°C, thereby forming a cathode catalyst layer. During this process, the amount of coating was controlled so that the cathode catalyst layer would contain 0.3 mg/cm² of Pt.

A Pt-Ru/CB catalyst powder containing platinum and ruthenium in a weight ratio of 30:24 was added to the similar mixed solvent, and the similar binder solution was added so that the ionomer/C ratio would be 0.8 (by weight). In this manner, a dispersion slurry for an anode catalyst layer was prepared.

Next, the dispersion slurry was sprayed onto the other side of the fluoropolymer electrolyte membrane on the hot plate kept under the similar conditions to form an anode catalyst layer. During this process, the amount of coating was controlled so that the anode catalyst layer would contain 0.25 mg/cm² of Pt and 0.2 mg/cm² of Ru.

Gas diffusion layers having a microporous layer (CX316 manufactured by NOK CORPORATION) were arranged to both sides of the membrane-catalyst layer assembly obtained above. The stack was hot pressed at 140°C and 1.1 MPa for 5 minutes. In this manner, a membrane-electrode assembly MEA-A was fabricated.

Both electrodes of the membrane-electrode assembly MEA-A were sandwiched between carbon separators having a serpentine gas supply groove, and gold-coated electrodes were provided on the separators on both sides.

### [Fabrication of membrane-electrode assembly MEA-B]

A membrane-electrode assembly MEA-B was fabricated in the similar manner as described above except that the cathode catalyst layer and the anode catalyst layer contained the same catalyst metals used in the anode catalyst layer in the membrane-electrode assembly MEA-A.

Specifically, the membrane-electrode assembly MEA-B was fabricated in the same manner as in the fabrication of the membrane-electrode assembly MEA-A, except that the cathode catalyst layer was formed by spraying a dispersion slurry which contained a Pt-Ru/CB catalyst powder having a platinum to ruthenium weight ratio of 30:24 onto one side of the fluoropolymer electrolyte membrane while controlling the amount of coating so that the cathode catalyst layer would contain 0.25 mg/cm² of Pt and 0.2 mg/cm² of Ru.

The above methods of the production of the membrane-electrode assembly MEA-A and the membrane-electrode assembly MEA-B are only illustrative and not limiting.

### [Verification experiments]

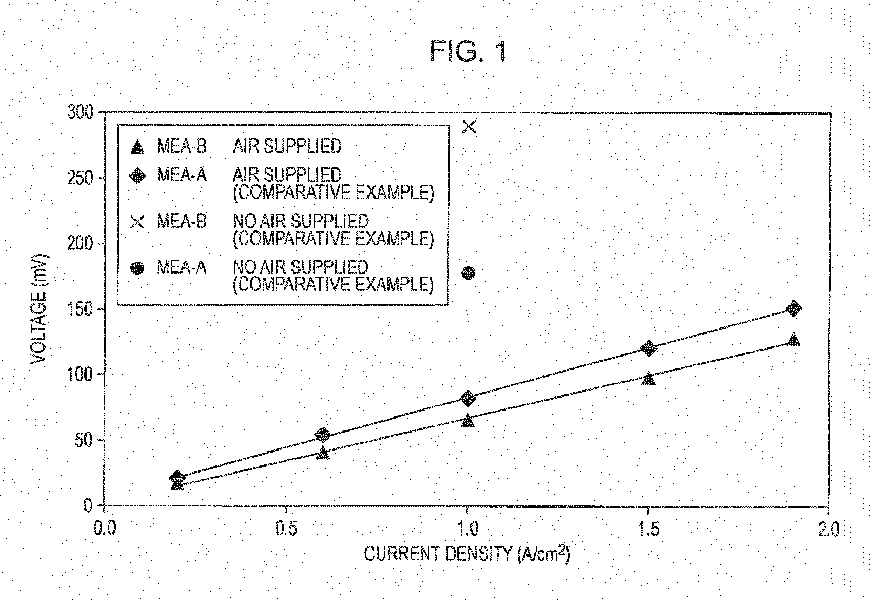

Fig. 1 is a diagram illustrating an example of the performance of the membrane-electrode assemblies in the purification of hydrogen. In Fig. 1, a relation between the membrane-electrode assemblies MEA-A and MEA-B is shown by plotting their voltages on the ordinate versus current density (A/cm²) on the abscissa.

As a comparative example, the performance of the membrane-electrode assemblies MEA-A and MEA-B in the purification of hydrogen was tested without any supply of air (oxygen) to the anode.

Specifically, the membrane-electrode assemblies MEA-A and MEA-B were each held at a cell temperature of about 65°C and a simulated reformer gas heated and humidified so that the dew point at the anode would be about 65°C was supplied to the anode. The simulated reformer gas used herein had a controlled gas composition including 20 ppm of CO gas, 20 vol% of CO₂ gas and the balance of H₂ gas.

The anode was connected to a positive terminal and the cathode to a negative terminal of a direct-current power supply, and the simulated reformer gas was supplied to the anode at such a flow rate that approximately 70 vol% of hydrogen at the anode would be passed to the cathode at a current density of 1 A/cm². Under such conditions, the purification of hydrogen was performed at a current density of 1 A/cm². In each of the membrane-electrode assemblies MEA-A and MEA-B, moisture in the gas that had been passed through the fluoropolymer electrolyte membrane was condensed at the cathode, and thereafter the flow speed of the gas was measured with a flow meter. As a result, the purified gas generated from the cathode contained not less than 99 vol% hydrogen on dry basis in agreement with the flow rate calculated based on the current density. On the other hand, a flow meter disposed downstream from a water condensation trap confirmed that the remaining proportion of the gas was discharged from the anode.

The voltage of the membrane-electrode assembly MEA-A was 74 mV at the start of the gas supply and was gradually increased in 1 hour to 169 mV as indicated by the symbol ● in Fig. 1. The voltage of the membrane-electrode assembly MEA-B was 60 mV at the start of the gas supply and was gradually increased in 1 hour to 289 mV as indicated by the symbol × in Fig. 1.

Next, the performance in hydrogen purification was tested while supplying air (oxygen) to the anode with respect to the membrane-electrode assembly MEA-A as a comparative example and the membrane-electrode assembly MEA-B as an example.

Specifically, the membrane-electrode assemblies MEA-A and MEA-B were each held at a cell temperature of about 65°C and a simulated reformer gas heated and humidified so that the dew point at the anode would be about 65°C was supplied to the anode. The simulated reformer gas used herein had a controlled gas composition including 20 ppm of CO gas, 20 vol% of CO₂ gas, 1.2 vol% of air and the balance of H₂ gas.

The purification of hydrogen was performed at a prescribed current density between 0.2 and 1.9 A/cm² while changing the flow rate and the current stepwise every 30 minutes so that approximately 70 vol% of hydrogen at the anode would be passed to the cathode. The voltage after 30 minutes after the current and the flow rate had been changed was measured, the results being plotted in Fig. 1.

As indicated with the symbol ◆ in Fig. 1, the voltage of the membrane-electrode assembly MEA-A did not show an increase (a change) and was stable for 30 minutes after the current and the flow rate had been changed, and was lower than the voltage in the comparative example without any supply of air to the anode (● in Fig. 1) over the entire range of current densities.

As indicated with the symbol ▲ in Fig. 1, the voltage of the membrane-electrode assembly MEA-B did not show an increase (a change) and was stable for 30 minutes after the current and the flow rate had been changed, and was lower than the voltage in the comparative example without any supply of air to the anode (x in Fig. 1) over the entire range of current densities.

In the comparative examples in which air was not supplied to the anode, the increase in the voltage of the membrane-electrode assembly MEA-B was markedly larger than that of the membrane-electrode assembly MEA-A. Thus, it has been shown that the membrane-electrode assembly MEA-B is more prone to carbon monoxide poisoning than the membrane-electrode assembly MEA-A. When, in contrast, air was supplied to the anode, the membrane-electrode assembly MEA-B achieved a markedly small increase in voltage as compared to the membrane-electrode assembly MEA-A.

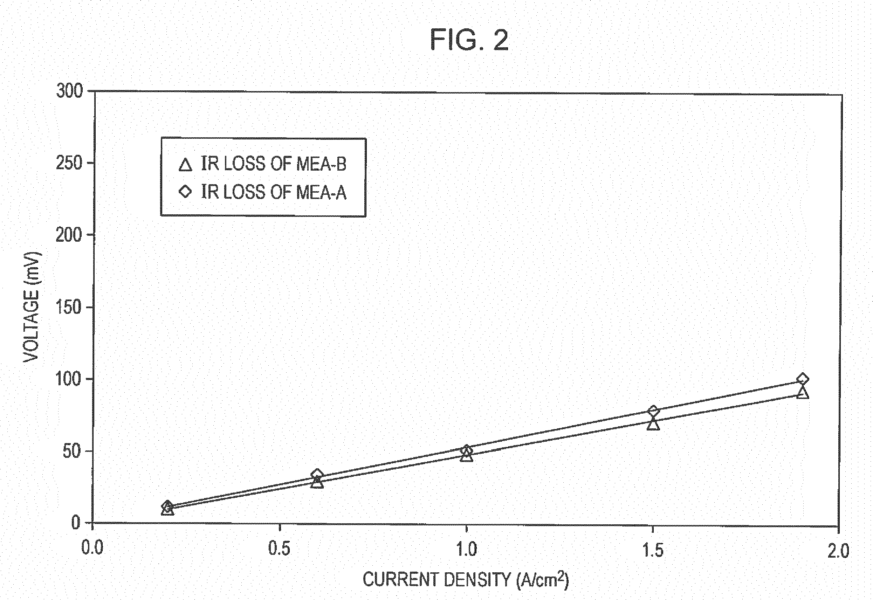

The membrane-electrode assemblies MEA-A and MEA-B were tested with an LCR meter to measure the resistance, and the IR losses were calculated. The results are plotted in Fig. 2. The IR loss of the membrane-electrode assembly MEA-B indicated with the symbol Δ in Fig. 2 was smaller than that of the membrane-electrode assembly MEA-A indicated with the symbol ◇ in Fig. 2.

The verification experiments discussed above have led to a conclusion that the use of a Pt-Ru/CB catalyst in both the anode and the cathode and the supply of air (oxygen) to the anode constitute a configuration that is simpler than heretofore adopted but still allows the purification of hydrogen to take place with high efficiency and stability.

The methods described above for testing the hydrogen purification performance of the membrane-electrode assemblies MEA-A and MEA-B are only illustrative and not limiting.

The total amount of Pt and Ru present in each of the anode and the cathode may be appropriately in the range of 0.1 to 1 mg/cm². In an embodiment, the total amount of Pt and Ru present in each of the anode and the cathode may be in the range of 0.1 to 0.5 mg/cm². The effects described hereinabove are obtained when the ratio of the number of Pt atoms to that of Ru atoms, Pt:Ru, is about 2:8 to 8:2.

The amount of air supplied to the anode may be appropriately in the range of 1 to 5 vol%. Supplying less than 1 vol% oxygen probably results in a failure to prevent the poisoning with CO sufficiently. If more than 5 vol% air is supplied, it is probable that extra hydrogen will be consumed and the oxidation reaction will accelerate the temperature increase.

### [Configuration of apparatus]

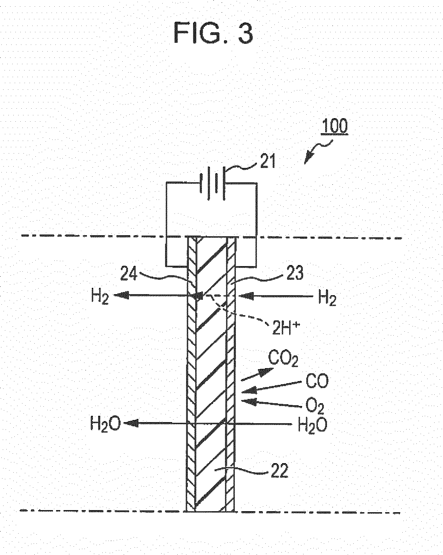

Fig. 3 is a view illustrating an example of the hydrogen purifiers according to Embodiment 1.

As illustrated in Fig. 3, a hydrogen purifier 100 includes an electrolyte membrane 22, an anode 23, a cathode 24, a power supply 21 and a separator that is not shown.

The electrolyte membrane 22 includes a proton conductive polymer. The configuration of the electrolyte membrane 22 is not limited as long as the membrane includes a proton conductive polymer. Examples of the electrolyte membranes 22 include the fluoropolymer electrolyte membrane in the membrane-electrode assembly MEA-B described hereinabove.

The anode 23 has an anode catalyst layer disposed on one side of the electrolyte membrane 22. The configuration of the anode catalyst layer is not limited as long as the layer contains Pt as a catalyst metal, and in this embodiment the anode catalyst layer includes Pt and Ru. For example, the anode catalyst layer may be a single electrode catalyst layer. Specific examples of the anode catalyst layers include the catalyst layer in the membrane-electrode assembly MEA-B described hereinabove.

The cathode 24 has a cathode catalyst layer disposed on the other side of the electrolyte membrane 22. The cathode catalyst layer includes Pt and Ru. The configuration of the cathode catalyst layer is not limited as long as the layer contains Pt and Ru as catalyst metals. Specific examples of the cathode catalyst layers include the catalyst layer in the membrane-electrode assembly MEA-B described hereinabove,

The separator has a fluid channel and allows the passage of carbon monoxide, hydrogen and oxygen to the anode 23. The configuration of the separator is not limited as long as the separator allows carbon monoxide, hydrogen and oxygen to be supplied to the anode 23 therethrough. For example, each of the anode 23 and the cathode 24 may be interposed between a pair of carbon separators. The surfaces of the anode 23 and the cathode 24 in contact with the separators may be provided with a serpentine groove as the flow channel,

The power supply 21 applies a voltage between the anode 23 and the cathode 24. The configuration of the power supply 21 is not limited as long as the power supply 21 can energize the anode 23 and the cathode 24. For example, the power supply 21 may be a direct current battery.

As described above and as demonstrated in the verification experiments, the hydrogen purifier 100 in the present embodiment can purify hydrogen from carbon monoxide-hydrogen mixed gas with high efficiency in spite of its configuration being simplified as compared to the conventional purifiers.

The hydrogen purification will be described in detail below. When a gas containing carbon monoxide (CO) and hydrogen (H₂) is supplied to the anode 23 of the hydrogen purifier 100, hydrogen releases electrons on the anode 23 to form hydrogen ions (H⁺) and the released electrons move to the cathode 24 through the power supply 21. On the other hand, the hydrogen ions, as illustrated in Fig. 3, reach the cathode 24 through the electrolyte membrane 22 and receive electrons from the cathode 24 to form hydrogen. In this manner, hydrogen is purified from the carbon monoxide-hydrogen mixed gas with high efficiency. Here, both the anode 23 and the cathode 24 include a Pt-Ru/CB catalyst and, as illustrated in Fig. 3, air (oxygen) is supplied to the anode 23. This configuration makes it possible to suppress the increase in the voltage of the hydrogen purifier 100 and thus to prevent the decrease in the efficiency of the hydrogen purifier 100. The anode catalyst layer is a single electrode catalyst layer. Thus, the internal resistance can be decreased and the purifier can purify hydrogen from the carbon monoxide-hydrogen mixed gas with high efficiency as compared to when the electrode catalyst layer in the anode 23 has a multilayer structure including, for example, a Pt/CB catalyst layer and a Ru/CB catalyst layer.

Besides hydrogen, as illustrated in Fig. 3, moisture (H₂O) passes through the anode 23, the electrolyte membrane 22 and the cathode 24. Such moisture is separated from hydrogen by an appropriate water condensation trap that is not shown.

### «Embodiment 2»

### [Configuration of apparatus]

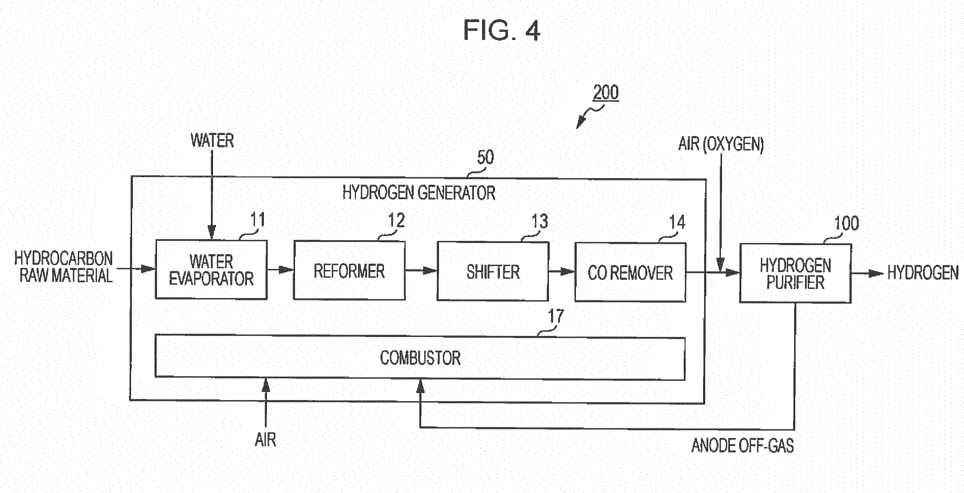

Fig. 4 is a view illustrating an example of the hydrogen purification systems according to Embodiment 2.

As illustrated in Fig. 4, a hydrogen purification system 200 includes a hydrogen generator 50 and a hydrogen purifier 100. The configuration of the hydrogen purifier 100 is the same as that described in Embodiment 1, and the detailed description thereof will be omitted.

The hydrogen generator 50 includes a water evaporator 11, a reformer 12, a shifter 13, a CO remover 14 and a combustor 17.

The reformer 12 generates a hydrogen-containing gas (a reformer gas) by the reforming reaction of a hydrocarbon raw material. The reforming reaction may be any type of a reaction such as steam reforming, auto-thermal reforming or partial oxidation.

As shown in Fig. 4, the present embodiment illustrates a steam reforming reaction. In this case, the hydrogen generator 50 includes appropriate devices necessary for the steam reforming reaction. Specifically, the hydrogen generator 50 includes, in addition to the reformer 12 and the combustor 17, such devices as a water evaporator 11 that generates steam and a water supply device (not shown) that supplies water to the water evaporator 11. The hydrocarbon raw material is a fuel including an organic compound(s) composed of at least carbon and hydrogen such as methane-based city gas, natural gas and LPG.

As illustrated in Fig. 4, the hydrocarbon raw material and water are introduced into the water evaporator 11, and the water evaporator 11 evaporates the water using the heat from the combustor 17. Here, the S/C ratio is frequently controlled to 2.5 to 3.5, although variable depending on factors such as the type of a reforming catalyst in the reformer 12 and the target efficiency. The reformer 12 has been heated by the combustor 17 to a temperature suited for the reforming reaction. As a result, the hydrocarbon raw material, together with steam, is supplied to the reformer 12 heated to an appropriate temperature (for example, about 650°C) and undergoes the reforming reaction to form a hydrogen-containing gas (a reformer gas). The reformer 12 is packed with a reforming catalyst. Specific examples of the reforming catalysts include those catalysts containing ruthenium, platinum and at least one element of rhodium and nickel.

The shifter 13 reduces the amount of carbon monoxide in the hydrogen-containing gas (the reformer gas) discharged from the reformer 12 by shift reaction. Specifically, the shifter 13 is connected to the gas exit side of the reformer 12 via an appropriate flow path. The shifter 13 has been heated by the combustor 17 to a temperature suited for the shift reaction. As a result, carbon monoxide in the reformer gas is converted into carbon dioxide by the reaction with water in the shifter 13, and the concentration of carbon monoxide in the reformer gas is decreased from 10 vol% to about 0.5 vol% at an appropriate temperature (for example, 300°C to 200°C). The shifter 13 is packed with a shift catalyst. Specific examples of the shift catalysts include copper-zinc catalysts.

The CO remover 14 includes at least one of a selective oxidizer that oxidizes carbon monoxide in the hydrogen-containing gas discharged from the shifter 13 so as to further reduce the amount of carbon monoxide and a methanator that methanates carbon monoxide in the hydrogen-containing gas discharged from the shifter 13 so as to further reduce the amount of carbon monoxide. The CO remover 14 is connected to the gas exit side of the shifter 13 via an appropriate flow path.

When, for example, the CO remover 14 includes a selective oxidizer, an appropriate amount of air (for example, [O₂]/[CO] = 2) is added by an air supply device that is not shown, to the reformer gas flowing in the path between the shifter 13 and the selective oxidizer. By the selective oxidation reaction, the concentration of carbon monoxide can be further decreased from 0.5 vol% to 20 ppm or less. Specific examples of the air supply devices include blowers.

The selective oxidizer has been heated by the combustor 17 so that the selective oxidation reaction will take place at an appropriate temperature (for example, about 150°C). The selective oxidizer is packed with a CO selective oxidation catalyst. Specific examples of the CO selective oxidation catalysts include Ru catalysts and Cu/CeO₂ catalysts.

When, for example, the CO remover 14 includes a methanator, the amount of carbon monoxide may be reduced by the methanation reaction with the methanator without the addition of air to the reformer gas.

The reformer gas discharged from the CO remover 14 is mixed with air that is supplied from an air supply device such as a blower in a ratio of 1.2 vol% relative to the flow rate of the reformer gas on dry basis. The gas is then supplied to the anode 23 of the hydrogen purifier 100. As described hereinabove, the supply of air (oxygen) to the anode 23 prevents the increase in the voltage of the hydrogen purifier 100 due to carbon monoxide poisoning. By applying a direct current of about 1 to 2 A/cm² between the electrodes in the hydrogen purifier 100, highly pure hydrogen can be obtained from the reformer gas with high efficiency. Specifically, 70 vol% to 85 vol% of hydrogen in the reformer gas is passed from the anode 23 to the cathode 24 and the remaining proportion is fed as an anode off-gas to the combustor 17 together with air and is combusted in the combustor 17. The heat generated by the combustion in the combustor 17 is utilized to heat the devices in the hydrogen generator 50. The high-purity hydrogen gas discharged from the hydrogen purifier 100 is dehydrated with an appropriate unit such as a water condensation trap that is not shown, and is used as, for example, a fuel for a hydrogen-driven device (for example, a fuel cell vehicle) that is not shown.

As described above and as demonstrated in the verification experiments, the hydrogen purification system 200 in the present embodiment can purify hydrogen from carbon monoxide-hydrogen mixed gas with high efficiency in spite of its configuration being simplified as compared to the conventional systems. With the shifter 13 and the CO remover 14, the concentration of carbon monoxide in the hydrogen-containing gas supplied from the reformer 12 can be reduced, for example, from about 10 vol% to 20 ppm or less. Thus, the amount of air (oxygen) to be supplied to the anode 23 may be set to the minimum required. As a result, problems such as the oxidative degradation of the hydrogen purifier 100 can be prevented.

According to one aspect of the present disclosure, hydrogen can be purified with high efficiency from carbon monoxide-hydrogen mixed gas using a simpler configuration than heretofore adopted. Thus, the aspect of the present disclosure may be applied to, for example, a hydrogen purifier that supplies hydrogen to a hydrogen-driven device such as a fuel cell vehicle.

## Claims

1. A method of operation of a hydrogen purifier, the hydrogen purifier comprising:
an electrolyte membrane (22) including a proton conductive polymer;
an anode (23) including an anode catalyst layer disposed on one side of the electrolyte membrane (22);
a cathode (24) including a cathode catalyst layer disposed on the other side of the electrolyte membrane (22);
a separator which has a fluid channel and configured to allow passage of carbon monoxide, hydrogen and oxygen to the anode (23); and
a power supply (21) configured to energize the anode (23) and the cathode (24),
the anode catalyst layer including Pt,
the cathode catalyst layer including Pt and Ru, wherein the method comprising a step of:
supplying oxygen, carbon monoxide, and hydrogen to the anode (23), and energizing the anode (23) and the cathode (24).

2. The method according to Claim 1, wherein the anode catalyst layer includes Pt and Ru.

3. The method according to Claim 1 or 2, wherein the anode catalyst layer is a single electrode catalyst layer.

4. The method according to Claim 1 or 2, wherein the oxygen is supplied to the anode by supplying an air of which an amount is in the range of 1 to 5 vol%.

5. A method of operation of a hydrogen purification system, the hydrogen purification system comprising:
a hydrogen generator including a reformer (12) that generates a hydrogen-containing gas by reforming reaction of a hydrocarbon raw material, a shifter (13) that reduces the amount of carbon monoxide in the hydrogen-containing gas discharged from the reformer (12) by shift reaction, and a CO remover (14) including at least one of a selective oxidizer that oxidizes carbon monoxide present in the hydrogen-containing gas discharged from the shifter (13) and a methanator that methanates carbon monoxide present in the hydrogen-containing gas discharged from the shifter (13); and
a hydrogen purifier (100) including an electrolyte membrane (22) including a proton conductive polymer, an anode (23) having an anode catalyst layer disposed on one side of the electrolyte membrane, a cathode (24) having a cathode catalyst layer disposed on the other side of the electrolyte membrane (22), a separator which has a fluid channel and through which the hydrogen-containing gas discharged from the CO remover and
oxygen are supplied to the anode, and a power supply (21) that energizes the anode (23) and the cathode (24);
the anode catalyst layer including Pt;
the cathode catalyst layer including Pt and Ru,
wherein the method comprising the step as defined in claim 1.

6. The method according to Claim 5, wherein the anode catalyst layer includes Pt and Ru.

7. The method according to Claim 5 or 6, wherein the oxygen is supplied to the anode by supplying an air of which an amount is in the range of 1 to 5 vol%.

## Patentansprüche

1. Verfahren zum Betreiben eines Wasserstoffreinigers, wobei der Wasserstoffreiniger umfasst:
eine Elektrolytmembran (22) mit einem Protonen leitenden Polymer;
eine Anode (23) mit einer Anoden-Katalysatorschicht, die auf einer Seite der Elektrolytmembran (22) angeordnet ist;
eine Kathode (24) mit einer Kathoden-Katalysatorschicht, die auf der anderen Seite der Elektrolytmembran (22) angeordnet ist;
einen Separator, der einen Fluidkanal hat und ausgebildet ist, den Durchgang von Kohlenmonoxid, Wasserstoff und Sauerstoff zu der Anode (23) zu ermöglichen; und
eine Leistungsversorgung (21), die ausgebildet ist, die Anode (23) und die Kathode (24) mit Energie zu versorgen,
wobei die Anoden-Katalysatorschicht Pt enthält,
die Kathoden-Katalysatorschicht Pt und Ru enthält, und wobei das Verfahren einen Schritt umfasst:
Zuführen von Sauerstoff, Kohlenmonoxid und Wasserstoff zu der Anode (23), und Zuführen von Energie zu der Anode (23) und der Kathode (24).

2. Verfahren nach Anspruch 1, wobei die Anoden-Katalysatorschicht Pt und Ru enthält.

3. Verfahren nach Anspruch 1 oder 2, wobei die Anoden-Katalysatorschicht eine Einzelelektroden-Katalysatorschicht ist.

4. Verfahren nach Anspruch 1 oder 2, wobei der Sauerstoff der Anode zugeführt wird, indem Luft zugeführt wird, deren Anteil im Bereich von 1 bis 5 Vol.-% liegt.

5. Verfahren zum Betreiben eines Wasserstoffreinigungssystems, wobei das Wasserstoffreinigungssystem umfasst:
einen Wasserstoffgenerator mit einem Reformer (12), der ein Wasserstoff enthaltendes Gas durch eine Reformierungsreaktion eines Kohlenwasserstoff-Rohmaterials erzeugt, eine Verschiebeeinheit (13), die den Anteil an Kohlenmonoxid in dem Wasserstoff enthaltenden Gas, das aus dem Reformer (12) abgegeben wird, durch eine Verschiebungsreaktion reduziert, und eine CO-Entfernungseinheit (14) mit einer selektiven Oxidiereinheit, die Kohlenmonoxid, das in dem von der Verschiebeeinheit (13) abgegebenen Wasserstoff enthaltenden Gas vorhanden ist, oxidiert, und/oder eine Methanisierungseinheit, die Kohlenmonoxid, das in dem von der Verschiebeeinheit (13) abgegebenen Wasserstoff enthaltenden Gas vorhanden ist, methanisiert; und
einen Wasserstoffreiniger (100) mit einer Elektrolytmembran (22), die ein Protonen leitendes Polymer enthält, mit einer Anode (23) mit einer Anoden-Katalysatorschicht, die auf einer Seite der Elektrolytmembran angeordnet ist, mit einer Kathode (24) mit einer Kathoden-Katalysatorschicht, die auf der anderen Seite der Elektrolytmembran (22) angeordnet ist, mit einem Separator, der einen Fluidkanal hat und durch den das von der CO-Entfernungseinheit abgegebene Wasserstoff enthaltende Gas und Sauerstoff der Anode zugeführt werden, und mit einer Leistungsversorgung (21), die die Anode(23) und die Kathode (24) mit Energie versorgt;
wobei die Anoden-Katalysatorschicht Pt enthält;
die Kathoden-Katalysatorschicht Pt und Ru enthält,
und wobei das Verfahren den Schritt umfasst, der in Anspruch 1 definiert ist.

6. Verfahren nach Anspruch 5, wobei die Anoden-Katalysatorschicht Pt und Ru umfasst.

7. Verfahren nach Anspruch 5 oder 6, wobei der Sauerstoff durch Zuführen von Luft, deren Anteil im Bereich von 1 bis 5 Vol.-% liegt, der Anode zugeführt wird.

## Revendications

1. Procédé de fonctionnement d'un purificateur d'hydrogène, le purificateur d'hydrogène comprenant :
une membrane électrolytique (22) comprenant un polymère conducteur de protons ;
une anode (23) comprenant une couche catalyseur d'anode disposée sur un côté de la membrane électrolytique (22) ;
une cathode (24) comprenant une couche catalyseur de cathode disposée sur l'autre côté de la membrane électrolytique (22) ;
un séparateur qui présente un canal de liquide et configuré pour permettre le passage du monoxyde de carbone, de l'hydrogène et de l'oxygène vers l'anode (23) ; et
une alimentation d'énergie (21) configurée pour la mise sous tension de l'anode (23) et de la cathode (24),
la couche catalyseur d'anode comprenant du Pt,
la couche catalyseur de cathode comprenant du Pt et du Ru, le procédé comprenant une étape de :
alimentation d'oxygène, monoxyde de carbone, et hydrogène à l'anode (23), et de mise sous tension de l'anode (23) et de la cathode (24).

2. Procédé selon la revendication 1, la couche catalyseur d'anode comprenant du Pt et du Ru.

3. Procédé selon la revendication 1 ou 2, la couche catalyseur d'anode étant une couche catalyseur à électrode unique.

4. Procédé selon la revendication 1 ou 2, l'oxygène étant alimenté à l'anode par l'alimentation d'air en une quantité située dans la plage de 1 à 5 % en vol.

5. Procédé de fonctionnement d'un système de purification d'hydrogène, le système de purification d'hydrogène comprenant :
un générateur d'hydrogène comprenant un reformeur (12) qui génère un gaz contenant de l'hydrogène par réaction de reformage d'une matière première hydrocarbure, un transformateur (13) qui réduit la quantité de monoxyde de carbone dans le gaz contenant de l'hydrogène évacué du reformeur (12) par réaction de conversion, et un agent d'élimination de CO (14) comprenant au moins l'un d'un oxydant sélectif qui oxyde le monoxyde de carbone présent dans le gaz contenant de l'hydrogène évacué du transformateur (13) et un appareil de méthanisation qui effectue la méthanisation du monoxyde de carbone présent dans le gaz contenant de l'hydrogène évacué du transformateur (13) ; et
un purificateur d'hydrogène (100) comprenant une membrane électrolytique (22) comprenant un polymère conducteur de protons, une anode (23) présentant une couche catalyseur d'anode disposée sur un côté de la membrane électrolytique, une cathode (24) présentant une couche catalyseur de cathode disposée sur l'autre côté de la membrane électrolytique (22), un séparateur qui présente un canal de liquide et à travers lequel le gaz contenant l'hydrogène évacué de l'agent d'élimination de CO et de l'oxygène sont alimentés à l'anode, et une alimentation d'énergie (21) qui place l'anode (23) et la cathode (24) sous tension ;
la couche catalyseur d'anode comprenant du Pt ;
la couche catalyseur de cathode comprenant du Pt et du Ru,
le procédé comprenant l'étape telle que définie selon la revendication 1.

6. Procédé selon la revendication 5, la couche catalyseur d'anode comprenant du Pt et du Ru.

7. Procédé selon la revendication 5 ou 6, l'oxygène étant alimenté à l'anode en alimentant de l'air en une quantité située dans la plage de 1 à 5 % en vol.
